# EUROPEAN PATENT APPLICATION

(11) **EP 3 315 021 A1**
(43) Date of publication of application: **02.05.2018**
(21) Application number: 16813774.3
(22) Date of filing: 23.06.2016
(51) Int. Cl.: A01G 23/00, A01G 13/00

(54) **MOVEMENT AND OSCILLATION MEASUREMENT DEVICE FOR TREES**

(30) Priority: 26.06.2015 ES 201500440 U
(71) Applicant: Cabanas García-Atance, Ana, 28014 Madrid (ES); Padilla Pérez, Juan Manuel, San Juan (Alicante) CP.: 03550 (ES)
(72) Inventor: PADILLA PÉREZ, Juan Manuel, San Juan (Alicante) CP.: 03550 (ES)
(74) Representative: Lahidalga de Careaga, Jose Luis
(86) International application number: PCT/ES2016/000070
(87) International publication number: WO 2016/207453

(57) **Abstract**

The invention relates to a movement and oscillation measurement device for trees, intended primarily to be used as part of a technique for accurately quantifying changes in the at-rest inclination of a tree likely to shift from its vertical position and move gradually from its central axis of equilibrium. The device can also be used to measure the oscillation displacement of the specimen when it is rocked by the wind, as well as to dampen and reduce this movement.

## Description

### TECHNICAL FIELD

The device presented below refers to a tool used to measure with relative precision the movement of a palm tree or other tree when its idle-state inclination is progressive. It also measures the sway or oscillation of palm trees or other trees due to the action of the wind, snow, or any other factor. In addition, it reduces and buffers the described movement, and ultimately supports a palm tree or other tree to avoid its toppling.

Although it could be useful for monitoring any type of vertical structure, it is especially designed its use in monitoring and controlling palm trees or other trees.

As such, it will mainly be of use in the forest environment, parks and public and private gardens, and in general, in the industrial agricultural sector, without these limiting its use in any other sector in which it could be useful.

### BACKGROUND OF THE INVENTION

Currently there are different support systems for leaning trees, based on the principle of opposing vector forces. These can act by compression (propping the tree with beams, often metallic, which support the weight of the tree that rests on them), or by tension (using metallic cables or cords to connect a tree to a robust support), and whose main objective is to stop the progress of its inclination to avoid its toppling.

The problem that these types of systems produce is that they impede the natural oscillation of the tree necessary to keep it in good health. It is a known fact that trees can strengthen their structure and root system, developing new tissue when it sways through the action of the wind, snow or similar. For this reason, dynamic cords or metallic cables, installed slightly flexed, are sometimes used, which allow this oscillating movement of the tree, limiting the distance of its movement. In this particular case, when, due to the action of the wind, the distance of the sway or oscillation exceeds the measurement predefined by the installer upon flexing the cable, the cable is violently tensed causing damage to the tree bark, and transmitting high tension to the fastening system, reducing its useful life.

In any case, these systems have as their principal and sole objective that of holding the tree, since none of them can quantify precisely the progress of its inclination, should this occur, hence information is lacking to be able to act on a tree appropriately. Therefore, on occasion, hasty decisions are made that lead to cutting down trees that could have lived more years if they were duly monitored.

The utility model U201500440, whose ownership belongs 100% to one of the applicants of the invention that is presented herein, solves part of the posed problem, since it brings together the following fundamental characteristics: a spring with handles and a segmented frame, forming a single extendible and retractable body, and which integrates measurement systems that can evaluate a tree's degree of inclination through observation and interpretation of a colour code.

Nonetheless, experience has demonstrated that it is possible to improve the characteristics of model U201500440 and, consequently, a new device has been created whose characteristics are the subject of this invention.

### DESCRIPTION OF THE INVENTION

It is a mechanical device that includes several parts that complement each other. It is articulated to allow the device to have a linear and retractable movement, on the same displacement axis.

The device can be designed as a single body composed of a spring with handles on the ends, and a framework divided into at least two segments of different diameter assembled one within the other, thus leaving one of them hidden inside the other. Each one is joined separately to the handles of the spring, so that when the handles are separated, the segments of the frame also separate, allowing the visualization of the interior segment which entails a colour code (as described in the model U201500440). It also incorporates a graded ruler in order to evaluate accurately the degree of displacement that has been produced, among other accessories that complete it.

This invention offers another realization of the same device that makes it more efficient, resistant and, among other improvements, allows it to be dismantled easily for maintenance or to be able to substitute any of its pieces if necessary. This configuration is composed of a preferably cylindrical and hollow body, with a handle on one end. On the other end, a removable lid with an opening in the center. This body will be the external part of the device that will house in its interior the spring that will be described below. Along its exterior surface, it has a colour code and a distance-measuring ruler, numbered in length-measurement units.

The second piece has a shape similar to the previous one, but of a lesser diameter in order to be able to introduce it through the described opening. It also has a colour code and a numbered ruler on its external surface. On one end there is a removable, flat circular piece, whose diameter is slightly smaller than the interior diameter of the body described previously, in such a way that it acts as a piston once it is introduced in the interior of the first piece, and it compresses the interior spring when it moves. This circular piece is called the compression disc. At the other end, there is a disc very similar to the previous one, but with a diameter larger than that of the cylinder of the first piece. This will be called the resonance disc and its function will be explained later in this text. There is also a handle on this end.

Both parts are especially designed so that, once assembled, a single linear movement is allowed whose movement axis is perfectly centered.

The third piece that comprises the mechanical part of the device is a spring with a diameter slightly smaller than that of the cylinder forming the first piece described, in such a way that it can be housed inside it.

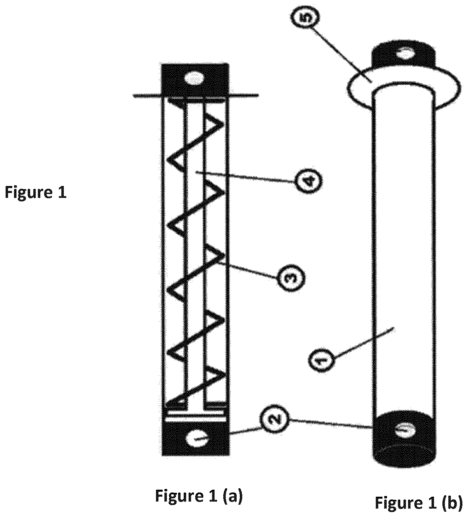

Once the pieces are assembled, the second piece will remain inside the described, preferably cylindrical, body, by the action of the interior spring, as shown in figure 1.

The device, by means of the use of metallic cables or cords, will be joined by one of its handles to a leaning tree, and by the other to a sufficiently robust support to withstand its weight. Thus, when the tree is inclined, it will pull on the interior rod that will compress the interior spring, separating both pieces and allowing the visualization of the measurement ruler printed on the rod and the colour code.

After having passed some time, if it is observed that the rod has moved from its initial position, despite the fact that there is no wind and the tree does not sway, we will know that the tree has tilted and how much, observing the ruler of the interior rod that protrudes from the cylinder. This will be the measurement of the inclination of the tree in static conditions or at rest.

One has to take into account that the interior spring has a limited range of compression and that during a windstorm the tree could sway violently, compressing the spring to its maximum point, transmitting all the tension to the rest of the device (this would be detrimental to the device and to the tree itself). It would regain its initial position at the end of the storm. For the good functioning of this invention, it will be necessary to know the maximum state of compression to which it has been subjected at some point in time.

For this purpose, the device incorporates a magnetic measuring system. This system is composed by a magnetized piece joined to the compression disc described earlier, and to a toothed or ribbed iron ring that adapts to the exterior diameter of the device. When the tension produced by the swaying of the tree compresses the spring, this ring will be dragged along the exterior surface of the device due to the force of the interior magnet, and the ribbing will keep it from returning to its initial position. Therefore, it will remain in that position, which will be interpreted as the maximum compression to which the device has been subjected. The cylinder's exterior ruler will mark the exact value of this movement.

The exterior ruler will have a printed mark indicating the maximum compression point of the interior spring. When the ring is marking that point, it will be recommended to substitute the spring with another of greater firmness.

With these described measurement systems, the device allows taking periodic measurements of the displacement by means of a visual analysis, in order to evaluate the tree's inclination.

Below, the electronic measuring systems incorporated to this invention are described:
In order to obtain an even more precise measurement, this device incorporates a laser or ultrasound length-measuring sensor installed in the cylindrical body described in the first place, and it will be aimed towards the resonance disc described in the second piece. In this way, the pulse emitted by the sensor will bounce off the resonance disc and will return to be registered again by the sensor, which will send a signal towards an electronic receiving plate to process this information. The sensor is enclosed in materials that protect it from the weather, and it is the only electronic piece that will remain exposed, since the rest of the electronic components have been designed to remain sheltered.

Next, the different receiver models are described, which were developed according to the environment in which they are going to be used.

To facilitate handling, a system has been designed that is composed of a removable console and a rapid connection receptacle.

The console is composed of a frame where an electronic signal-receiving plate is housed, and it transforms this signal into distance measurement units. It also has a screen to be able to see this measurement. In addition, it has some push buttons to activate it, take measurements, memorize each measurement, etc., and some connections on the back to be able to receive the signal once it is coupled. Furthermore, on the back, it has a compartment for a small power battery.

The connection receptacle has some connections (of the signal from the sensor) placed in such a position that when the console is connected to the receptacle, contact is made with the connections of the console.

Both pieces have some small magnets so that they remain joined during their use. The placement of the electrical connections and the magnets will be such that, upon connecting the console to the receptacle by means of the magnetic attraction of the magnets to each other, they coincide with the electrical connections.

For its use in parks or forests, and due to the distance at which the monitored trees may be, a telematic monitoring system has been developed that is described below:
In this model, the electronic plate serves as the signal receiver and data sender, and offers the advantage of being able to send data in real time to mobile a telephone, computer or similar device, in order to be managed.

In this case, the electronics will be housed in a watertight box near the sensor (the tree trunk, for example), and provided with the wireless technology that is applicable for emitting the signal efficiently for each case.

Especially for the parks and gardens, and in the cases in which it may be useful, the receiver also contains a warning program in which, upon reaching a certain measurement value (which would be easily adjustable for each case) above the foreseen standards, a specific signal is emitted to activate some luminous beacons to warn pedestrians of a fallen tree, or that a sudden increase has occurred in its inclination (e.g., due to snow accumulation in the treetop), or to warn drivers of the presence of the tree occupying a roadway.

### BRIEF DESCRIPTION OF THE DRAWINGS

To complement the description that is being made and for a better understanding of the invention's characteristics, a set of drawings, illustrative but not exhaustive, as an integral part of this description, in which the following has been represented:
Figure 1 shows the device from two different perspectives (a and b): a drawing (a) of the interior and another in relief (b) to be able to discern the external shape of the device. This drawing shows the three parts described in the first place, already assembled. As explained above, they form the mechanical part of the device. The preferably cylindrical body described first (1) can be observed.

This piece has a handle (2) in which a metallic cable or cord can be secured.

Another piece can be observed of lesser diameter (4), with a handle identical to the previous one, and a resonance disc (5) with a diameter larger than that of the cylinder on one of its ends. On the other end, there is also a compression disc (6) which acts as a piston, compressing the interior spring when the device is operating.

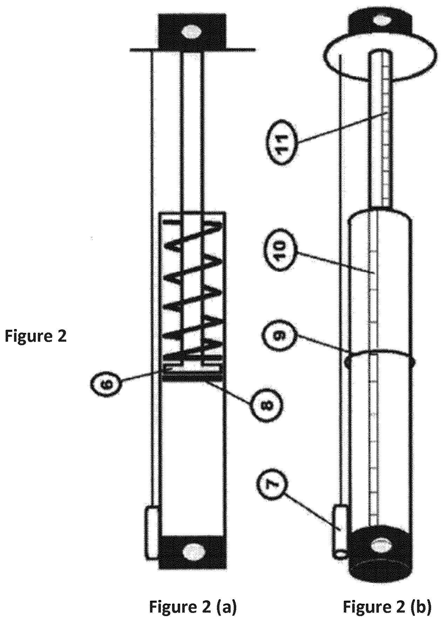

Figure 2 also shows two drawings (a and b) of the opened device, in a position of operation or tension. For this reason, the spring is shown compressed.

In this figure, the laser or ultrasound sensor (7) is shown that this device incorporates, pointing to and focusing on the resonance disc (5).

This figure also shows the magnetic measuring system as was explained previously, which is composed of two parts: an internal magnet (8) joined to the compression disc (6), and an iron ring (9) that moves along the external body of the device, driven by the internal magnet and which remains fixed by its ribbing when the magnet returns to its original position by the action of the spring. Once the ring has moved and is fixed, it will show a value in length-measuring units on an exterior graded ruler (10). Another graded ruler (11) printed along the interior rod (4) shows the degree of inclination of the tree at rest (without wind, etc.).

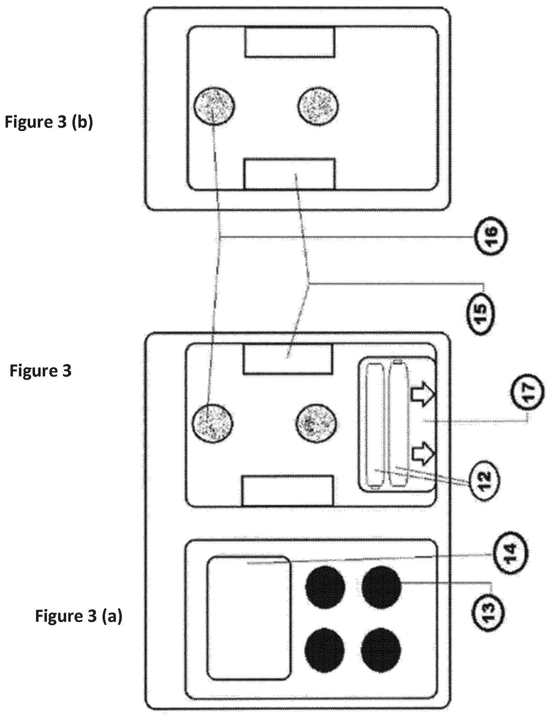

Figure 3 shows the front and back of the data collecting console (figure 3 (a)), and the connection receptacle coupled to the console (figure 3 (b)). In the drawings, one can note the different external components of this electronic device that serve to receive the signal from the sensor and transform it into measurement units and show it on the screen (14) that it has incorporated. The use of the keypad (13) mainly allows pressing to make a measurement, store data in the memory and to display the stored data.

On the back of this console, there is a compartment (17) where the battery (12), the metallic electrical connection plates (15) and the magnets (16) for fastening to the connection receptacle are housed.

The connection receptacle (figure 3 (b)) has the magnets (16) and the same contact areas of connections (15) as the console, in such a way that by connecting both pieces, the two plates of the console come in contact with those of the receptacle in order to transfer the sensor's signal.

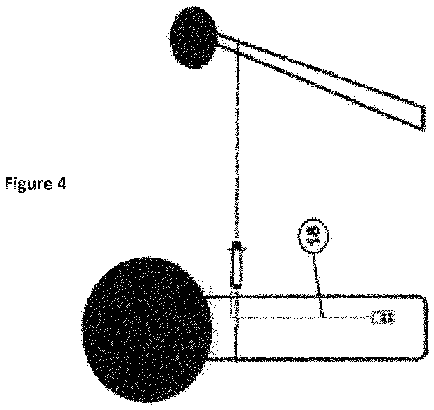

In figure 4, an example of the installation is shown. A signal cable (18) transmits the signal of the sensor's pulse to the connection receptacle with the console already coupled to it, in this way the handling of the device is facilitated, making it accessible.

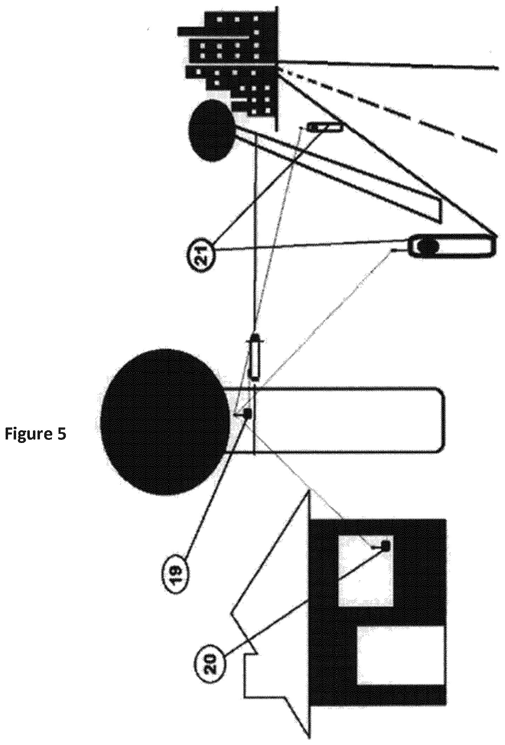

Figure 5 shows a model of wireless installation. In this case an emitter (19) transmits the information by radiofrequency, electronically, or through other wireless technology to another receiving device (20), namely, a computer, mobile telephone or similar. Figure 5 also shows some beacons (21) duly situated on the roadway, park or public thoroughfare, which warns of a fallen tree or of a much-accented increase in the inclination. The technology used for this service will depend on each circumstance, and according to the distance the information has to be sent.

### PREFERRED REALISATION OF THE INVENTION

The regulations for the protection of plant heritage can vary according to the geographic area, but they have in common the protection of those species that are of greater size, age or historical value, among other exceptional characteristics that allow them to be catalogued as singular or protected trees, and, in general, as assets of botanical and local cultural interest. This implies that their conservation and protection against external agents that threaten their existence is of public interest. Other trees, despite their great size, do not have the characteristics to be included in this selection of trees and, therefore, do not have this extraordinary protection.

In any case, the safety of the people will always be a priority compared to the protection of plant heritage so that if a tree, due to its inclination or for any other circumstance, represents a threat, it could be eliminated regardless of its degree of protection.

There are trees whose inclination was produced at the beginning of their growth due to some particular circumstance, but then managed to become robust and stop the progress of their inclination, for which reason, despite leaning slightly, they do not necessarily represent a hazard. However, there are other trees that, due to structural or root weakness or to some other factor, present a progressive inclination that is accentuated slowly with the passing of time. In this second case, taking the necessary actions is required and even indispensable to stop that progress and avoid as far as possible their toppling over.

The availability of specialized tools for cataloguing and evaluating this risk becomes, therefore, essential for making appropriate decisions in each circumstance.

As has been explained, the advantage of this invention is that of incorporating precise measuring systems that make an accurate evaluation of the degree of inclination of any vertical structure and that send it rapidly and efficiently. In addition, by storing this information chronologically, it allows making a prognosis with which an approximate date can be determined in which the structure in question could fall.

As an example, let us look at the environment of parks and gardens, where a technician in charge of checking the urban trees has installed a pair of units of the device, following the model illustrated in figure 4nh, to monitor those trees that present a similar degree of inclination, in a public park. The technician visits the park weekly in order to make a measurement, and transpiring the first weeks from which this device is installed, he verifies that one of the trees has not increased its inclination, while the other presents a progressive inclination at the rate of 2 millimeters weekly. With this information, the technician can predict that, in the next 100 weeks, it may have inclined at least 20 centimeters. An expert could determine if that inclination represents a risk of imminent falling, and put into motion an action protocol to stop this fateful evolution. Upon occasion, adequate pruning could totally or partially resolve this situation. Meanwhile, some beacons (21), such as those claimed in this application, could be placed to warn of the hazard, and the area could even be cordoned off to divert the transit of persons. Meanwhile the other tree, whose inclination is not progressive, could remain without any intervention and be allowed to grow freely as it was doing.

In a very similar way, a forest technician or ranger could act on those trees situated near picnic areas, highways or roads, etc.

At present, there are local regulations that limit the right to clear trees even when they are located on private property. For this reason, an owner who wants to cut down a tree of certain characteristics on his own property must request a felling permit from the competent organisation (often it deals with the environmental council of the city). In such case, it is a municipal technician who ultimately grants this permit following, usually, a simple visual analysis that determines the degree of danger of a tree.

Often, due to lacking tools that determine if the tree in question presents a progressive or static inclination, and to avoid greater risks, the city council grants the felling permit, in any case.

With the appearance in the state of the art of this new invention presented here, a city technician could offer the applicant of the felling permit a monitoring period of the tree to determine whether or not it must be cut down. Having transpired that period, the more appropriate decision can be made for each case. During the monitoring period, the tree remains held, so that the risk of falling is practically nil.

## Claims

1. Measuring device of movement and oscillation for trees **characterized in that** it presents:
A spring;
A hollow body that houses the spring in its interior;
Another body of a diameter smaller than the internal diameter of the spring, configured to move lengthwise through the interior of the hollow body, compressing the spring when this movement is produced.
One or more graded rulers that allow quantifying the degree of movement, and some handles for attaching the device to a tree supporting system.

2. Measuring device of movement and oscillation for trees according to claim 1 that incorporates a colour code to be able to make quick evaluations of the degree of movement.

3. Measuring device of movement and oscillation for trees according to claims 1 and 2 that incorporates a magnetic measuring mechanism composed by an internal magnetized piece, and one or several external metallic pieces that will move along the surface of the device, marking values on the external measuring rulers.

4. Measuring device of movement and oscillation for trees according to claims 1, 2 and 3 that incorporates some electronic devices that, associated with some laser or ultrasound movement sensors and a piece with a flat face, perpendicular to the direction of movement of the device, which acts as a resonance surface, permitting taking exact measurements of the degree of movement of the device.

5. Measuring device of movement and oscillation for trees according to the above claims **characterised in that** it incorporates a removable console and a rapid connection receptacle, and which contains the electronic plate, screen and battery, among other components, in order to be able to keep them sheltered.

6. Measuring device of movement and oscillation for trees according to the above claims that also incorporates devices for wireless data transmission in order to be able to send the electronically collected information farther in an efficient manner.

7. Measuring device of movement and oscillation for trees according to the above claims that also incorporates some beacons that receive the information from the device, and emits warning signals for certain values.

## Amended claims

### Amended claims under Art. 19.1 PCT

**1.** Measuring device of movement and oscillation for trees **characterized in that** it presents:
A spring;
A hollow body that houses the spring in its interior;
Another body of a diameter smaller than the internal diameter of the spring, configured to move lengthwise through the interior of the hollow body, compressing the spring when this movement is produced.
One or more graded rulers that allow quantifying the degree of movement and some handles for attaching the device to a tree supporting system.

**2.** Measuring device of movement and oscillation for trees according to claim 1 that incorporates a colour code to be able to make quick evaluations of the degree of movement.

**3.** Measuring device of movement and oscillation for trees according to claims 1 and 2 that incorporates a magnetic measuring mechanism composed by an internal magnetized piece, and one or several external metallic pieces that will move along the surface of the device, marking values on the external measuring rulers.

**4.** Measuring device of movement and oscillation for trees according to claims 1, 2 and 3 that incorporates some electronic devices that, associated with some laser or ultrasound movement sensors and a piece with a flat face, perpendicular to the direction of movement of the device, which acts as a resonance surface, permitting taking exact measurements of the degree of movement of the device.

**5.** Measuring device of movement and oscillation for trees according to the above claims **characterized in that** it incorporates a removable console and a rapid connection receptacle, and which contains the electronic plate, screen and battery, among other components, in order to be able to keep them sheltered.

**6.** Measuring device of movement and oscillation for trees according to the above claims that also incorporates devices for wireless data transmission in order to be able to send the electronically collected information farther in an efficient manner.

**7.** Measuring device of movement and oscillation for trees according to the above claims that also incorporates some beacons that receive the information from the device, and emits warning signals for certain values.

Statement under Art. 19.1 PCT
In virtue of article 19 of the international cooperation treaty in matter of patents, and in view of the international search report regarding international application number PCT/ES2016/00070, it is hereby enclosed to this letter a replacement sheet of the claims in order to correct possible errors that there might be in the original claims sheet.

Below are explained the amendments made in the attached sheet:

With the intention of maintaining the coherence with the title of this PCT application, claims 1 and two have been combined as follows:

Claim 1 is amended, in that it did not include a measurement system and now it incorporates one of the systems included in claim 2 in the original claims sheet.

As a result, in the new claims sheet, the content of claim 1 is extended, while the content from claim 2 is reduced in view of the originally filed documents
